# EUROPÄISCHE PATENTANMELDUNG

(11) **EP 1 229 432 A2**
(43) Veröffentlichungstag der Anmeldung: **07.08.2002**
(21) Anmeldenummer: 01126955.2
(22) Anmeldetag: 13.11.2001
(51) Int. Cl.: G06F 3/02, G09B 21/00

(54) **Eingabevorrichtung und Verfahren zur Eingabe von Informationen in eine Steuereinheit**

(30) Priorität: 15.12.2000 DE 10062669
(71) Anmelder: BSH Bosch und Siemens Hausgeräte GmbH, 81669 München (DE)
(72) Erfinder: Mager, Gerhard, 90556 Cadolzburg (DE)

(57) **Zusammenfassung**

Die Erfindung betrifft eine Eingabevorrichtung (1) und ein Verfahren zur Eingabe von Informationen in eine Steuereinheit mit Rückmeldung an einen Benutzer, insbesondere eine zentrale Steuereinheit (20) mit einer elektronischen Programmsteuerung für ein Hausgerät (3). Um ein verbessertes Verfahren und eine dementsprechende Vorrichtung zur Eingabe von Steuerungsinformationen, Parametern etc. insbesondere an einem Hausgerät zu schaffen wird vorgeschlagen, daß die Eingabevorrichtung (1) eine Einrichtung umfaßt, die zur Ausgabe von taktilen und/oder akustischen Signalen R zur Rückmeldung an einen Benutzer ausgebildet ist, wobei die Signale R zu Tastenpositionen, Funktionen oder Menüs etc. eindeutig zugeordnet sind.

## Beschreibung

Die vorliegende Erfindung betrifft eine Eingabevorrichtung und ein Verfahren zur Eingabe von Informationen in eine Steuereinheit, insbesondere zur Einstellung einer zentralen Steuereinheit eines Hausgerätes mit Rückmeldung an einen Benutzer.

Es sind Vorrichtungen und dementsprechende Verfahren bekannt, bei denen die Eingabevorrichtung in Form eines Schalters ausgeführt ist. Der Zugang zu Haushaltsgeräten erfolgt insbesondere für Blinde und Sehbehinderte heute im wesentlichen durch die taktile Kommunikation im Bereich einer Eingabevorrichtung eines Hausgerätes. Die wachsende Funktionalität und Komplexität von Haushaltsgeräten, wie z. B. die Bedienung über Funktionsmenüs unter Darstellung auf Klartext- bzw. Characteroder Graphik-Anzeigen oder sonstige Displays, Bedienung über interaktive Tastschalter etc., schließt die taktile Kommunikation immer stärker aus. Auch wird die Dauer der Eingewöhnungs- oder Lernphase auch für Benutzer ohne objektiv eingeschränkte Sinneswahrnehmung stetig erhöht.

Auch die heute schon zum Teil verwendete akustische Rückmeldung mittels Quittungstönen, wie z. B. Summer, Piepser etc., ist nur für sehr wenig Funktionen eines Haushaltsgerätes anwendbar. Die Anforderungen bezüglich der akustischen Rückmeldungen, welche bei komplexen Funktionsmenüs und Statusinformationen erforderlich sind, werden dadurch nur sehr mangelhaft erfüllt.

Es ist die Aufgabe der vorliegenden Erfindung, ein verbessertes Verfahren und eine dementsprechende Vorrichtung zur Eingabe von Steuerungsinformationen, Parametern etc. an einem Hausgerät zu schaffen.

Diese Aufgabe wird erfindungsgemäß durch ein Verfahren mit den Merkmalen von Anspruch 1 und eine Vorrichtung mit den Merkmalen von Anspruch 19 gelöst. Vorteilhafte Weiterbildungen der Erfindung sind Gegenstand der jeweiligen Unteransprüche.

Erfindungsgemäß weist eine Eingabevorrichtung zur Eingabe einer Information in eine Steuereinheit eine Einrichtung auf, die zur Ausgabe von taktilen und/oder akustischen Signalen zur Rückmeldung an einen Benutzer ausgebildet ist. Dabei sind die Signale zu Tastenpositionen, Funktionen oder Menüs etc. eindeutig zugeordnet. Ein Sehen von Bedienungselementen ist damit nicht mehr zwingend erforderlich, durch die Art der Rückmeldung ist die Bedienung einer Eingabe und eine Überprüfung deren Richtigkeit durch einen Anwender schnell lernbar.

In einer wesentlichen Weiterbildung der Erfindung ist das Rückmeldesignal im Bereich der Eingabevorrichtung wahrnehmbar. Das Rückmeldesignal wird dazu im Bereich der Eingabevorrichtung ausgesendet und vorzugsweise dort auch als Quittung durch Vibration im wesentlichen nur an der Stelle der Eingabe selber wahrnehmbar gemacht. Durch die Eingabevorrichtung wird damit eine Reizung vorzugsweise mindestens zweier menschlicher Sinne durch Aussendung taktiler und akustischer und/oder optischer Signale veranlaßt.

In einer Ausführungsform der Erfindung erhält eine Logik von der zentralen Steuereinheit ein elektrisches Rückmeldesignal, das einer Unterscheidung in verschiedene Quittungsund/oder Warnsignale dient. Die Abgabe erfolgt vorzugsweise über den mechanischen Schwingungserzeuger an der Eingabevorrichtung.

Vorzugsweise wird eine Aktivierung von Bedienungselementen und/oder Eingabemenüs der Eingabevorrichtung durch Ausgabe von Quittungstöne und/oder Sprachansagen als Rückmeldesignal eindeutig angezeigt. Auch diese Maßnahme dient einer verbesserten Orientierung des Anwenders.

Vorteilhafterweise wird neben den Rückmeldungen und Orientierungshilfen bei der Einstellung auch eine Zeitinformation durch Sprachansage ausgegeben. Als Zeitinformation wird dabei nicht nur die Ansage einer aktuellen Tageszeit in der betreffenden Zeitzone verstanden, sondern z.B. auch die Ansage einer auf der Grundlage einer gerade abgeschlossenen Einstellung bzw. Programmierung vorausgesagte ungefähre Endezeit eines Programmes.

Besonders vorteilhaft ist die Ausbildung von Funktions- und Programmenüs zur Ausgabe über ein Hörmenü. Eine Anzeige in der Eingabevorrichtung dient dann nur noch zur Ergänzung. In einer Weiterbildung der Erfindung ist dann vorzugsweise zusätzlich die Eingabevorrichtung zur Eingabe durch eine Sprachsteuerung ausgebildet. Die Eingabevorrichtung umfaßt in einem Ausführungsbeispiel der Erfindung eine Einrichtung zur Spracherkennung und Detektion von festgelegten Sprachbefehlen. Diese Einrichtung ist zur Spracherkennung und Detektion von 2 bis ca. 10, vorzugsweise aber zur Erkennung von 5 festgelegten Sprachbefehlen ausgebildet. Eine Zuordnung interaktiver Tastschalter der Eingabevorrichtung zu den ausgegebenen Funktionen ist dann vorteilhafterweise in einem Hörmenü auf wenige eindeutige Tasterfunktionen beschränkt wie, wie z.B. AUSWAHL, BESTÄTIGUNG, VOR, ZURÜCK und HILFE. Die beschriebene Einrichtung ist vorzugsweise zur Spracherkennung nach einer Musteranalyse ausgebildet. Das Vokabular des Hörmenüs für eine akustische Sprachausgabe ist insbesondere durch den länderspezifischen Klartext einer Character- oder Graphik- Anzeige des Hausgerätes festgelegt und vorzugsweise um eine situations- und/oder fallbezogene Hilfefunktion erweitert.

In der Eingabevorrichtung ist eine Logik vorgesehen und derart ausgebildet, daß die Logik während der Dauer einer Eingabe eines Sprachbefehls kein Signal zur Wandlung und Ausgabe eines Rückmeldesignals ausgibt oder freigibt. Damit ist auch die Gefahr einer Rückkopplung weitgehend ausgeschlossen. Zudem kann ein erfahrener Anwender durch eine schnelle Eingabe von Befehlen eine Programmierung rasch abschließen, ohne jeweils durch die Ausgabe eines Rückmeldesignals unterbrochen zu werden.

Als Einrichtung zur Wandlung des elektrisch erzeugten Quittungssignals oder eines Rückmeldesignals ist ein mechanischer Schwinger vorgesehen, insbesondere ein Schwinger in Form eines piezoelektrischen Elementes. Diese Elemente sind wartungsfrei, klein, leicht und relativ preiswert, wobei sich auch ihr Energiebedarf in Grenzen hält. Insbesondere benötigen sie nur im aktiven Zustand elektrische Leistung, Leerlaufverluste treten damit nicht auf.

Die Eingabevorrichtung ist von der zentralen Steuereinheit des Hausgerätes getrennt als mobile Einheit ausgeführt. Eine Verbindung der Eingabevorrichtung mit der zentralen Steuereinheit des Hausgerätes erfolgt über einen drahtlosen Datenkanal. Dieser drahtlose Datenkanal kann als Infrarot-Übertragungsweg ausgebildet sein. Vorzugsweise ist der drahtlose Datenkanal aber als Funkstrecke ausgebildet, insbesondere als Funkstrecke nach dem DECT- oder dem Blue-tooth-Standard oder einem vergleichbaren Funk-Standard für Datenschnittstellen an Kommunikations- und/oder Hausgeräten. Damit sind Bedienung und auch Abfragen eines jeweiligen Status der Haushaltsgeräte nicht länger nur innerhalb der Greifweite des Anwenders möglich. Es wird vielmehr innerhalb eines Haushaltes ein ortsunabhängiger Bedien- und Anzeigedialog ermöglicht.

Die Eingabevorrichtung wird in einer bevorzugten Ausführungsform der Erfindung als mobile Einheit am menschlichen Körper fixiert. Die Eingabevorrichtung ist im wesentlichen als portabler Kopfhörer mit Mikrophon ausgebildet, insbesondere als drahtloses Headset mit einem manuellen Bedien- und Anzeigeteil. Alternativ kann die Eingabevorrichtung auch ein manuelles Bedien- und Anzeigeteil mit einer Freisprecheinrichtung aufweisen. Die Eingabevorrichtung weist vorzugsweise auch einen für eine interaktive Bedienung ausgebildeten graphischen Bildschirm auf, insbesondere ein Graphik-LCD als Touchscreen.

Besonders vorteilhafterweise werden innerhalb eines Haushaltes an einem Standort mehrere Hausgeräte durch standardisierte Datenschnittstellen mit der Eingabevorrichtung verbunden und gemeinsam durch die Eingabevorrichtung bedient und kontrolliert. Diese Art der Organisation setzt eine Standardisierung der Bedien- und Anzeigedialoge voraus, da für alle Haushaltsgeräte immer das zentrale und mobile Anzeige- Bedienteil benutzt wird. Damit ist die Handhabung und Bedienung vieler Hausgeräte für den Anwender auch übersichtlicher. Zudem entstehen bei den einzelnen Haushaltsgeräten keine Zusatzkosten, da eine vorhandene Daten-Schnittstelle benutzt wird und eine erfindungsgemäße Eingabevorrichtung nur einmal gekauft werden muß. Ferner entfallen aber auch weitere Zusatzkosten an jedem Hausgerät, da unter Verwendung einer mobilen Eingabevorrichtung nicht alle Haushaltsgeräte mit der "stationären akustischen Sprachausgabe" ausgerüstet sein müssen. Da erfahrungsgemäß nicht alle Anwender diese Funktion auch tatsächlich nutzen, können die jeweiligen Eingabevorrichtungen an die Bedürfnisse der unterschiedlichen Anwendergruppen modular angepaßt werden.

Das Hausgerät weist in einer Ausführungsform der Erfindung neben einer Sende- und Empfangseinheit zum Aufbau des drahtlosen Datenkanals eine Notbedienung und Notanzeige auf. Nur eine Notbedienung und -anzeige ist stationär an den Haushaltsgeräten vorgesehen. Die gegenüber bekannten Anzeigevorrichtungen an Hausgeräten erheblich reduzierte Ausstattung bewirkt eine wesentliche Einsparung von Kosten. Dies bewirkt weiter eine verbesserte Integrationsfähigkeit von Einbau-Hausgeräten in eine Küchenzeile oder eine Wohnungseinrichtung durch den fast vollständigen Wegfall der Bedien- und Anzeigeelemente an dem jeweiligen Hausgerät.

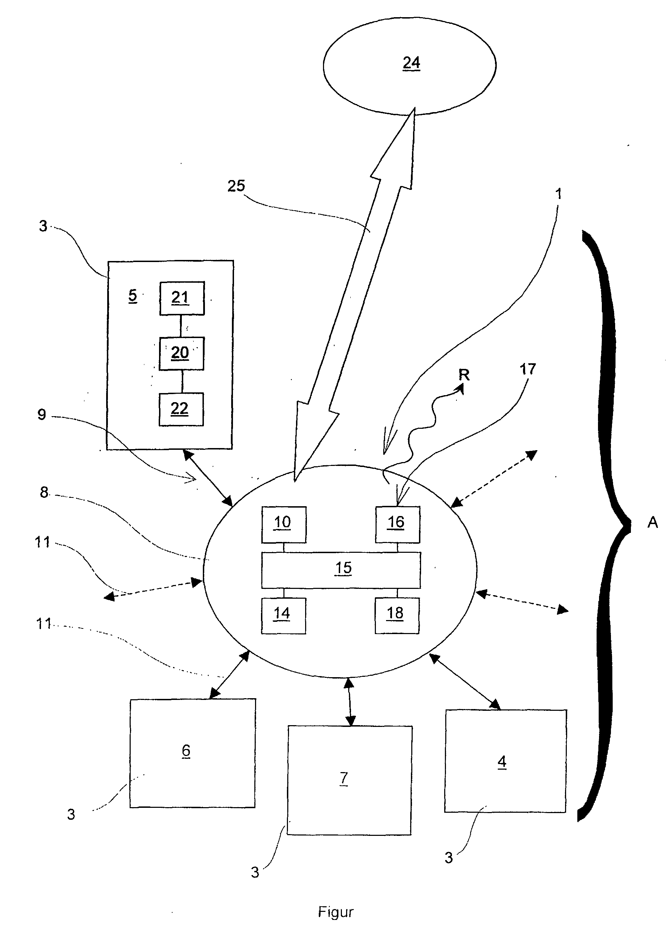

Nachfolgend wird ein Ausführungsbeispiel der Erfindung anhand der Zeichnung näher erläutert:

In der Zeichnung zeigt die einzige Figur eine schematische Darstellung einer erfindungsgemäßen Eingabevorrichtung 1. Die stationär in einem Haushalt an einem Standort A verteilten Haushaltsgeräte 3, wie eine Waschmaschine 4, eine Geschirrspülmaschine 5, ein Herd 6, ein Kühlgerät 7 und ähnliche, sind mit der Eingabevorrichtung 1 in Form eines zentralen und mobilen Anzeige-/ Bedienteils 8 vernetzt. Dabei wird für die Vernetzung eine für die Vernetzung der Haushaltsgeräte 3 vorhandene genormte externe Datenschnittstelle 9 genutzt. Das an diese Schnittstelle 9 anzuschließende externe Interface-Modul ist für alle Hausgeräte 3 in Form des mobilen Anzeige-/ Bedienteils 8 ausgebildet. Zur drahtlosen Kommunikation des mobilen Anzeige-/ Bedienteils 8 mit den jeweiligen Hausgeräten 3 verfügen beide Teile über ein besonders geformtes Funk-Mobilteil bzw. eine DECT-Funk-Schnittstelle mit Sende- und Empfangseinheit 10, die in dem dargestellten Ausführungsbeispiel nach dem DECT-Standard arbeitet. Die Abkürzung DECT steht für "Digital European standard for Cordless Telephones". DECT beschreibt einen Standard zur Sprach- und Datenübertragung, der einen drahtlosen Datenkanal 11 mit einer Reichweite für die genannten Datensignale in Gebäuden von 30-50 m garantiert, im Freien sogar bis zu 300 m.

Das Mobilteil 8 kann zur besseren Handhabung auch fest am menschlichen Körper fixiert werden. Um einen barrierefreien Zugang insbesondere für Blinde und sehbehinderte Personen auch bei der wachsenden Anzahl von Haushaltsgeräten 3, welche über komplexe Funktionsmenüs und Statusinformationen mit Darstellung durch Klartext/Character- oder Graphik-Anzeigen/Displays und eine Bedienung über interaktive Tastschalter verfügen, wird eine akustische Sprachausgabe an dem Mobilteil 8 realisiert. Das Mobilteil 8 enthält einen Kleinstlautsprecher zur akustischen Ausgabe und einige Tastschalter für die Eingabe von Steuerungsbefehlen und das Bewegen innerhalb der Menüs. Das zentrale und mobile Anzeige- / Bedienteil 8 enthält als Komponenten eine Stromversorgung 14 für den mobilen Betrieb mit Metall Hybrid Akkus, eine zentrale Steuerung 15, das DECT-Mobil-Teil 8 mit Sender und Empfänger, ein Graphik-LCD 16 mit interaktiver Bedienung mittels Touchscreen 17 inklusive Beleuchtung. Die konzentrierte und zentrale Darstellung von komplexen Funktionsmenüs, Status- Ablauf und Warnanzeigen aller Haushaltsgeräte 3 erfolgt in der mobilen Eingabevorrichtung 1 mittels eines länderspezifischen Klartexts und Piktogrammen auf den Graphik-LCD 16. Weiter wird die zentrale und mobile Bedienung über das interaktive Graphik-LCD 16 mittels des Touchscreens 17 an der Eingabevorrichtung 1 vorgenommen. Dazu ist das Mobilteil 8 auch zur Aussendung von taktilen und/oder akustischen Signalen R zur Rückmeldung an den Benutzer ausgebildet. So werden gleich mehrere Sinneswahrnehmungen des Anwenders zur Übermittlung von diversen Rückmeldesignalen genutzt.

Eine Einrichtung 18 zur Sprachausgabe generiert eine Rückmeldung für den Anwender, wobei die Einrichtung 18 als Option für stark sehbehinderte Menschen auch eine Sprachsteuerung umfaßt. Damit ist bei Bedarf eine Kopplung von Sprachsteuerung und Sprachausgabe nur einmal innerhalb des zentralen und mobilen Anzeige- / Bediensystems am Standort A zu realisieren und für alle Haushaltsgeräte 3 gleichermaßen bei vereinheitlichten und standardisierten Bedien- und Anzeigedialogen anwendbar. Die eigentliche akustische Sprachausgabe und Steuerung der Gerätefunktion erfolgt somit auf der Grundlage eindeutiger Begriffe, flexibel und drahtlos.

Die Haushaltsgeräte 3 enthalten alle einheitlich eine elektronische Steuereinheit 20, eine Notbedienung und Notanzeige 21 für die Hauptfunktionen des jeweiligen Hausgerätes 3 und eine DECT-Funk Basisstation 22 mit Sender und Empfänger. Es entstehen durch einen Einsatz der Eingabevorrichtung 1 bei den Haushaltsgeräten keine Zusatzkosten, da eine im Regelfall schon vorhandene Daten-Schnittstelle benutzt wird. Blinde oder sehbehinderte Personen können sich ein externes Interface-Modul zur Anwendung mit jedem zu bedienenden Haushaltsgerät 3 als Option kaufen, um das Hausgerät 3 in die beschriebene Vernetzung einzufügen. Das entsprechende DECT-Mobilteil 8 ist nur einmalig anzuschaffen, da dieses DECT-Mobilteil mit allen DECT-Basisstationen unabhängig kommunizieren kann. Die drahtlose DECT-Kommunikation hat in geschlossenen Gebäuden eine Reichweite von 30-50 m. Statusabfragen und Bedienung der Haushaltsgeräte sind damit auch außerhalb der Sichtweite und insbesondere durch Wände hindurch möglich.

Die einfache Übertragung von Daten zwischen dem mobilen Bedienteil 1 und den Hausgeräten 3 kann auch zum Einspielen von Kundendienstinformationen und Software Updates in das beschriebene System über die DECT-Funk-Datenschnittstelle 9 genutzt werden. Es kann erfolgen, indem beispielsweise von einem Dienstanbieter 24 aus die neuen oder aktualisierten Daten 25 über einen vernetzten Computer oder einfach über ein Mobiltelefon in das mobile Bedienteil 1 eingespielt werden. Diese Übertragung kann auch unter Verwendung einer Infrarot-Schnittstelle zwischen dem Mobiltelefon und dem mobilen Bedienteil 1 erfolgen. Von dem mobilen Bedienteil 1 aus können die Informationen dann zu gegebener Zeit ohne Eingriff des Anwenders in das jeweils betreffende Hausgerät 3 übertragen werden.

In dem beschriebenen System wird auch ein gemeinsames Energiemanagement durch Übertragung von Daten zur differenzierten Darstellung von Ressourcen-Kosten realisiert. So wird etwa der Strom- und Wasserverbrauch der Haushaltsgeräte 3 an das zentrale und mobile Anzeige- / Bediensystem 1 gemeldet und dort angezeigt. Es ist dadurch in dem dargestellten System auch eine Übertragung von Information über den Wäschezustand von der Waschmaschine zum Trockner zur Prozeßoptimierung möglich. Eine Anzeige, Verarbeitung und Speicherung der Daten ist zentral möglich, wobei eine Steuerung aller Haushaltsgeräte 3 gemeinsam automatisch so ausgelegt wird, daß keine Überlastung der Stromleitungen innerhalb des Haushalts auftreten kann und/oder aber besonders günstige Stromtarife genutzt werden.

## Patentansprüche

1. Eingabevorrichtung (1) zur Eingabe einer Information in eine Steuereinheit mit Rückmeldung an einen Benutzer, insbesondere eine zentrale Steuereinheit (20) mit einer elektronischen Programmsteuerung für ein Hausgerät (3),
**dadurch gekennzeichnet, daß** die Eingabevorrichtung (1) eine Einrichtung umfaßt, die zur Ausgabe von taktilen und/ oder akustischen Signalen (R) zur Rückmeldung an einen Benutzer ausgebildet ist, wobei die Signale (R) zu Tastenpositionen, Funktionen oder Menüs etc. eindeutig zugeordnet sind.

2. Eingabevorrichtung (1) nach Anspruch 1,
**dadurch gekennzeichnet, daß** das Rückmeldesignal (R) im Bereich der Eingabevorrichtung (1) wahrnehmbar ist.

3. Eingabevorrichtung (1) nach einem oder beiden der vorhergehenden Ansprüche,
**dadurch gekennzeichnet, daß** Funktions- und Programmenüs zur Ausgabe über ein Hörmenü ausgebildet sind.

4. Eingabevorrichtung (1) nach einem der vorhergehenden Ansprüche,
**dadurch gekennzeichnet, daß** die Eingabevorrichtung (1) zur Eingabe durch eine Sprachsteuerung ausgebildet ist.

5. Eingabevorrichtung (1) nach dem vorhergehenden Anspruch,
**dadurch gekennzeichnet, daß** die Eingabevorrichtung (1) eine Einrichtung (8) zur Spracherkennung und Detektion von festgelegten Sprachbefehlen umfaßt.

6. Eingabevorrichtung (1) nach dem vorhergehenden Anspruch,
**dadurch gekennzeichnet, daß** die Einrichtung (8) zur Spracherkennung und Detektion von 2 bis ca. 10, vorzugsweise aber zur Erkennung von 5 festgelegten Sprachbefehlen ausgebildet ist.

7. Eingabevorrichtung (1) nach dem vorhergehenden Anspruch,
**dadurch gekennzeichnet, daß** die Einrichtung (8) zur Spracherkennung nach einer Musteranalyse ausgebildet ist.

8. Eingabevorrichtung (1) nach einem der vorhergehenden Ansprüche,
**dadurch gekennzeichnet, daß** das Vokabular für eine akustische Sprachausgabe durch den länderspezifischen Klartext einer Character- oder Graphik- Anzeige (21) des Hausgerätes (3) festgelegt ist.

9. Eingabevorrichtung (1) nach einem der vorhergehenden Ansprüche,
**dadurch gekennzeichnet, daß** in der Eingabevorrichtung (1) eine Logik vorgesehen und derart ausgebildet ist, daß die Logik während der Dauer einer Eingabe eines Sprachbefehls kein Signal zur Wandlung und Ausgabe eines Rückmeldesignals (R) ausgibt oder freigibt.

10. Eingabevorrichtung (1) nach einem der vorhergehenden Ansprüche,
**dadurch gekennzeichnet, daß** als Einrichtung zur Wandlung eines elektrisch erzeugten Quittungssignals oder eines Rückmeldesignals (R) ein mechanischer Schwinger vorgesehen ist, insbesondere ein Schwinger in Form eines piezoelektrischen Elementes.

11. Eingabevorrichtung (1) nach einem der vorhergehenden Ansprüche,
**dadurch gekennzeichnet, daß** die Eingabevorrichtung (1) von der zentralen Steuereinheit (20) des Hausgerätes (3) getrennt als mobile Einheit (8) ausgeführt ist.

12. Eingabevorrichtung (1) nach dem vorhergehenden Anspruch,
**dadurch gekennzeichnet, daß** die Eingabevorrichtung (1) mit der zentralen Steuereinheit (20) des Hausgerätes (3) über einen drahtlosen Datenkanal (11) verbunden ist.

13. Eingabevorrichtung (1) nach dem vorhergehenden Anspruch,
**dadurch gekennzeichnet, daß** der drahtlose Datenkanal (11) als Infrarot-Übertragungsweg ausgebildet ist.

14. Eingabevorrichtung (1) nach einem der Ansprüche 11 bis 12,
**dadurch gekennzeichnet, daß** der drahtlose Datenkanal (11) als Funkstrecke ausgebildet ist, insbesondere nach dem DECT- oder Blue-tooth-Standard oder einem vergleichbaren Funk-Standard für Datenschnittstellen (10) an Kommunikations - und/oder Hausgeräten (3).

15. Eingabevorrichtung (1) nach einem der vorhergehenden Ansprüche,
**dadurch gekennzeichnet, daß** die Eingabevorrichtung (1) einen für eine interaktive Bedienung ausgebildeten graphischen Bildschirm (16) aufweist, insbesondere ein Graphik-LCD als Touchscreen.

16. Eingabevorrichtung (1) nach einem der vorhergehenden Ansprüche,
**dadurch gekennzeichnet, daß** das Hausgerät (3) neben einer Sende- und Empfangseinheit (22) zum Aufbau des drahtlosen Datenkanals (11) eine Notbedienung und Notanzeige (21) aufweist.

17. Eingabevorrichtung (1) nach einem der vorhergehenden Ansprüche,
**dadurch gekennzeichnet, daß** die Eingabevorrichtung (1) im wesentlichen als portabler Kopfhörer mit Mikrophon ausgebildet ist, insbesondere als drahtloses Headset mit einem manuellen Bedien- und Anzeigeteil.

18. Eingabevorrichtung (1) nach einem der vorhergehenden Ansprüche 1 bis 17,
**dadurch gekennzeichnet, daß** die Eingabevorrichtung (1) eine Freisprecheinrichtung umfaßt.

19. Verfahren zur Eingabe von Informationen in eine Steuereinheit, insbesondere zum Einstellen einer zentralen Steuereinheit (20) mit einer elektronischen Programmsteuerung für ein Hausgerät (3),
**dadurch gekennzeichnet, daß** die Eingabevorrichtung (1) taktile und/oder akustische Signale (R) zur Rückmeldung an einen Benutzer ausgibt, wobei die Signale (R) Tastenpositionen, Funktionen oder Menüs etc. eindeutig zugeordnet sind.

20. Verfahren nach dem vorhergehenden Anspruch,
**dadurch gekennzeichnet, daß** das Rückmeldesignal (R) im Bereich der Eingabevorrichtung (1) ausgesendet und vorzugsweise dort als Quittung durch Vibration im wesentlichen nur an einer Stelle der Eingabe selber wahrnehmbar gemacht wird.

21. Verfahren nach einem oder beiden der vorhergehenden Ansprüche,
**dadurch gekennzeichnet, daß** Funktions- und Programmenüs des Hausgerätes (3) über ein Hörmenü der Eingabevorrichtung (1) ausgegeben werden.

22. Verfahren nach einem oder mehreren der vorhergehenden Ansprüche 19 bis 21,
**dadurch gekennzeichnet, daß** die zentrale Steuerung (15) ein elektrisches Rückmeldesignal mit einer Unterscheidung in verschiedene Quittungs- und/oder Warnsignale (R) absendet, vorzugsweise zur Abgabe über den mechanischen Schwingungserzeuger.

23. Verfahren nach einem oder mehreren der vorhergehenden Ansprüche 19 bis 22,
**dadurch gekennzeichnet, daß** eine Aktivierung von Bedienungselementen der Eingabevorrichtung (1) durch Ausgabe von Quittungstönen und/oder Sprachansagen als Rückmeldesignal (R) eindeutig angezeigt wird.

24. Verfahren nach einem oder mehreren der vorhergehenden Ansprüche 19 bis 23,
**dadurch gekennzeichnet, daß** eine Zeitinformation durch eine Sprachansage ausgegeben wird, insbesondere eine Statusmeldung und/oder eine Endezeit.

25. Verfahren nach einem oder mehreren der vorhergehenden Ansprüche 19 bis 24,
**dadurch gekennzeichnet, daß** eine Zuordnung interaktiver Tastschalter der Eingabevorrichtung (1) zu den ausgegebenen Funktionen in einem Hörmenü auf wenige eindeutige Tasterfunktionen beschränkt sind, wie z.B. AUSWAHL, BESTÄTIGUNG, VOR, ZURÜCK und HILFE.

26. Verfahren nach einem oder mehreren der vorhergehenden Ansprüche 19 bis 25,
**dadurch gekennzeichnet, daß** durch die Eingabevorrichtung (1) eine Reizung mindestens zweier menschlicher Sinne durch Aussendung taktiler und akustischer und/oder optischer Signale (R) veranlaßt wird.

27. Verfahren nach einem oder mehreren der vorhergehenden Ansprüche 19 bis 26,
**dadurch gekennzeichnet, daß** die Eingabevorrichtung (1) als mobile Einheit (8) am menschlichen Körper fixiert wird, insbesondere in Form eines Headsets.

28. Verfahren nach einem oder mehreren der vorhergehenden Ansprüche 19 bis 27,
**dadurch gekennzeichnet, daß** innerhalb eines Haushaltes an einem Standort (A) mehrere Hausgeräte (3) durch standardisierte Datenschnittstellen mit der Eingabevorrichtung (1) verbunden und gemeinsam durch die Eingabevorrichtung (1) bedient und kontrolliert werden.

29. Verfahren nach einem oder mehreren der vorhergehenden Ansprüche 19 bis 28,
**dadurch gekennzeichnet, daß** über die Eingabevorrichtung (1) neue oder aktualisierte Daten (25) von einem Dienstanbieter (24) aus eingespielt und von dort aus an die jeweiligen Hausgeräte (3) übertragen werden.
